# EUROPEAN PATENT SPECIFICATION

(11) **EP 4 339 477 B1**
(45) Date of publication and mention of the grant of the patent: **26.03.2025**
(21) Application number: 23194054.5
(22) Date of filing: 29.08.2023
(51) Int. Cl.: F16D 41/07

(54) **ONE-WAY CLUTCH**
EINWEGKUPPLUNG
EMBRAYAGE UNIDIRECTIONNEL

(30) Priority: 14.09.2022 JP 2022146292; 15.09.2022 JP 2022147174
(43) Date of publication of application: 20.03.2024
(73) Proprietor: NSK-WARNER K.K., Tokyo 141-8560 (JP)
(72) Inventor: OZAWA, Yoshiya, Shizuoka-ken, 437-8545 (JP); SHIBATA, Hiroshi, Shizuoka-ken, 437-8545 (JP)
(74) Representative: Cross, James Peter Archibald

(56) References cited:
- US-A- 4 989 705
- US-A- 5 894 915

## Description

### TECHNICAL FIELD

The present invention relates to a one-way clutch used for transmitting a torque in vehicles or industrial machinery.

### BACKGROUND ART

Conventionally, in a one-way clutch equipped with a mechanism for locking rotation transmissions in one direction and in the direction opposite thereto, there is known one whose retainer ring as a constitutional element, has a bearing function (For example, refer to Patent document 1).

The retainer ring of the one-way clutch of the Patent document 1 supports an outer race and an inner race coaxially. The retainer ring is formed with cut-away portions extended axially with predetermined circumferential intervals, taking assembling the outer race and the inner race into consideration.

Patent Document 1: Japan Patent Application laid-open No.H7-208506

In recent years, in vehicles or the like, weight reductions of mechanical elements or devices are strictly needed. And, in automatic transmission that is a device in which a one-way clutch is used, a resin retainer as a constitutional element for a one-way clutch is taken into consideration.

However, when considering the use of resin for the retainer of the one-way clutch in the Patent Document 1, there is a concern that the retainer might be damaged when the outer race and the inner race are assembled to the retainer or when the retainer is assembled into equipment such as automatic transmissions or industrial machinery as a one-way clutch, since there is little stress relief in the radial direction in the retainer due to its shape.

The present invention has been made in view of the above-described circumstances, and an object of the present invention is to provide a one-way clutch which can be assembled without damaging the retainer and is reduced in weight.
US 5 894 915 A relates to a one way clutch which is incorporated between a driving shaft and a driven shaft and has a function of transferring only power in a one way rotation of te driving shaft to the driven shaft.

### STATEMENT OF INVENTION

To solve the above problem, according to the present invention, there is provided a one-way clutch having an inner race, an outer race arranged on a center axis of said inner race coaxially therewith, a plurality of cam members interposed between said inner race and said outer race to serve torque transmission between said inner race and said outer race, a retainer member for holding the plurality of said cam members, and a spring member biassing the plurality of said cam members to no torque transmitting positions, being characterized in that:
the retainer member is provided with an annular plate arranged on said center axis, said plate member being provided on one axial side surface thereof with a plurality of bearing portions supporting the inner circumferential surface of said outer race, and the same number of holding portions as the number of said bearing portions, the holding portions each holding two or more predetermined number of said cam members with predetermined intervals along the circumferential direction;
the plurality of said bearing portions is respectively arranged, with respect to said center axis, at diagonal positions along the circumferential direction equiangularly, the plurality of said holding portions is respectively arranged, with respect to said center axis, at diagonal positions along the circumferential direction equiangularly;
the plurality of said bearing portions and the plurality of said holding portions are arranged alternately along the circumferential direction; and
said annular plate is formed with a plurality of cut-away portions extended radially.

The present invention can provide a structure of a one-way clutch that can be assembled easily without damaging the retainer and reduced in weight.

### BRIEF DESCRIPTION OF DRAWINGS

Fig. 1 is a front view showing a one-way clutch according to an embodiment of the present invention, seen from one axial direction.
Fig. 2 is a side view of the one-way clutch according to the embodiment, seen from a radial direction.
Fig. 3 is a perspective view showing an appearance of the one-way clutch according to the embodiment of the present invention.
Figs. 4A and 4B are enlarged cross sectional views of an essential portion, showing states of a cam member of the one-way clutch according to the embodiment, Fig. 4A showing no torque loaded state and Fig. 4B showing torque-loaded state.
Fig. 5A is a perspective view of a retainer, and Fig. 5B is a side view of the retainer.

### EMBODIMENT FOR CARRYING OUT THE INVENTION

In the following, an embodiment of the one-way clutch according to the present invention will be described with reference to the accompanying drawings. The embodiment will be described with respect to the one-way clutch of a type in which an inner race is a driving side and an outer race is a driven side, torque being transmitted from the inner race to the outer race.

At first, directions relating to the one-way clutch according to the embodiment of the present invention, will be defined. In the description of the present embodiment, the term "center axis C " refers to the center axis of the one-way clutch, that is, the center axis of the outer race or the inner race, and the terms "axial direction", "radial direction", and "circumferential direction" respectively refer to the axial direction, radial direction, and circumferential direction with respect to that center axis C.

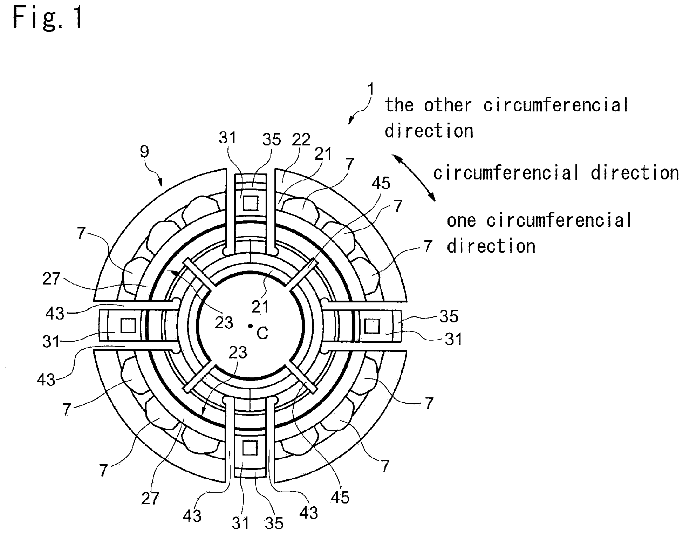

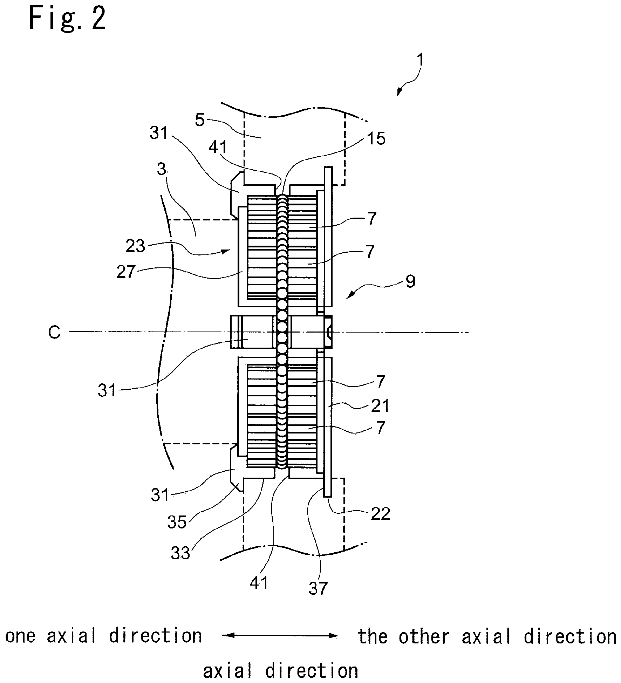

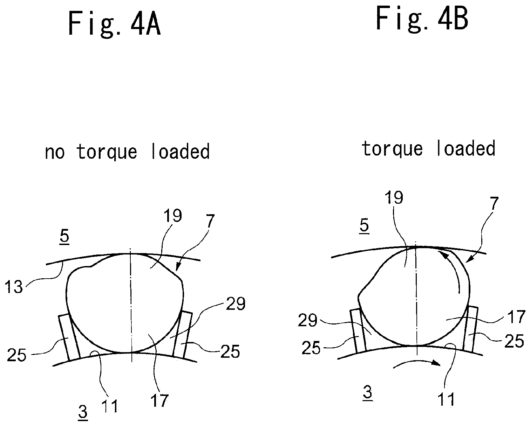

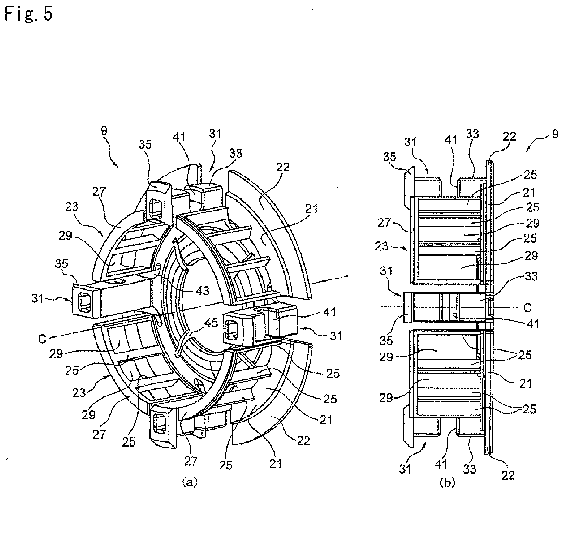

As to the axial direction, the term "one axial direction" refers to the axial direction approaching the viewer on the front side of the plane of the drawing sheet of each of Figs. 1, 4A and 4B, and the term "the other axial direction" refers to the axial direction becoming distant away from the viewer on the back side of the plane of the drawing sheet of each of Figs. 1, 4A and 4B. In Figs. 2 and 5B, the left side of the drawing sheet is the one axial side, and the right side of the drawing sheet is the other axial side. As to the circumferential direction, in each of Figs. 1, 4A and 4B, the term "one circumferential direction" refers to the clockwise rotating direction toward the drawing sheet, and the term "the other circumferential direction" refers to the counter clockwise rotating direction toward the drawing sheet.

Meanwhile, with respect to the rotational direction of the one-way clutch, for convenience sake, explanation will be made with respect to the rotational direction of the inner race relative to the outer race, but rotation of the outer race and rotation of the inner race are relative to each other. For example, in a case where the inner race is rotatable clockwise, the outer race is rotatable counterclockwise, and even in a case where the inner race and the outer race rotate in the same direction, if rotational speeds of the outer race and inner race differ from each other, it is possible to say that the outer race or the inner race rotates relatively in either direction.

Fig. 1 is a front view of a one-way clutch 1 according to the embodiment showing a state seen from the one axial side.

Fig. 2 is a side view of the one-way clutch 1 according to the embodiment showing a state seen from the radial direction.

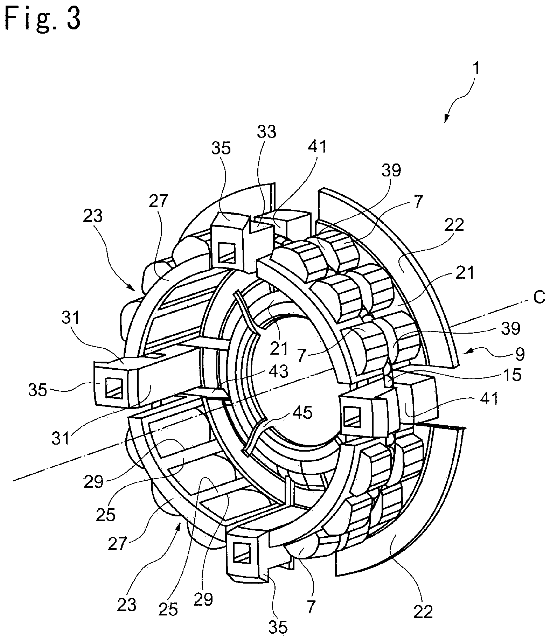

Fig. 3 is a perspective view showing an appearance of the one-way clutch 1 according to the embodiment.

Meanwhile, the inner race 3 and the outer race 5 are shown by imaginary lines in Fig. 2, and are omitted in Fig. 1 and Fig.3.

Figs. 4A and 4B is enlarged cross sectional views of an essential portion, showing states of a cam member 7 of the one-way clutch 1 according to the embodiment, Fig. 4A showing no torque loaded state and Fig. 4B showing a torque loaded state.

As shown in each of Figs. 1 to 4, the one-way clutch 1 according to the present embodiment includes an inner race 3 and an outer race 5 arranged coaxially on the center axis C, a plurality of cam members 7 interposed between the inner race 3 and the outer race 5, a ring-shaped retainer 9 for holding the plurality of the cam members 7, and a spring member 15 biassing the plurality of the cam members 7 into a direction to be in contact with the inner circumferential surface 11 of the outer race and the outer circumferential surface 13 of the inner race (refer to Figs. 4A and 4B) in no torque transmitting state. In the present embodiment, the spring member 15 is a garter spring.

The plurality of cam members 7 are torque-transmitting members which are brought into engagement with the outer peripheral surface 11 of the inner race 3 and the inner peripheral surface 13 of the outer race 5 to transmit torque from the inner race 3 to the outer race 5. The cam members 7 each is column-shaped whose peripheral surface is curved. A cross-section of the cam member 7 has a shape which is a combination of a semicircular portion 17 and an inflated or bulged portion 19 that inflates or bulges outwardly from a line connecting both ends of a circle arc of the semicircular portion 17, as shown in Figs. 4A and 4B. The inflated or bulged portion 19 has a top portion that is round and gently mountainous. And an end of the contour of the inflated or bulged portion 19 and the other end of the contour of the inflated or bulged portion 19 are smoothly continuous to, respectively, an end of the arc of the semicircular portion 17 and the other end of the arc of the semicircular portion 17. The cam member 7 is so formed that the length of the straight line connecting the top portion of the inflated or bulged portion 19 and the bottom of the arc of the semicircular portion 17 is shorter than the length connecting the vicinities of both ends of the arc of the semicircular portion 17.

Fig. 5A is a perspective view showing an appearance of the retainer 9, and Fig. 5B is a side view of the retainer 9.

In the present embodiment, the retainer 9 as a whole is formed integrally of a resin. The retainer 9 is integrally provided with an annular plate 21 arranged at the other axial side of the inner race 3 and the other axial side of the outer race 5 on the center axis C and the plurality of the cam member holding portions 23 projected from the one axial side surface of the annular plate 21 in the one axial direction thereof. In the present embodiment, there are four cam member holding portions 23.

Next, a structure of one of the cam member holding portions 23 will be explained. The remaining cam member holding portions 23 have the same structure.

The cam member holding portion 23 is integrally composed of a plurality of column portions 25 arranged equidistantly in the circumferential direction and projected from the one axial side surface of the annular plate 21 to the one axial direction and an arcuate flange 27 integrally connecting the one axial side ends of the plurality of the column portions 25. Accordingly, the cam member holding portion 23 is partial-cylindrical. In the present embodiment, there are four column portions 25.

The cross section of the column portion 25 is rectangular and shaped to be formed by radially extended sides and circumferentially extended sides, as shown in each of Figs. 4A and 4B. In the present embodiment, the cross section of the column portion 25 has an oblong shape whose radially extended sides are longer than circumferentially extended sides. The inner circumferential surfaces of the respective column portions 25 and the inner circumferential surface of the flange portion 27 are smoothly continuous and arranged on the surface of an imaginary cylinder centered on the center axis C.

The cam member holding portion 23 has three window portions 29 radially formed therethrough arranged equidistantly in the circumferential direction, defined by four column portions 25, the flange portion 27 and a portion of the annular plate 21. In more detail, each window portion 29 is defined by a pair of column portions 25 neighboring each other in the circumferential direction, a portion of the flange 27 and a portion of the annular plate 21 axially opposed to each other between the pair of the column portions 25 neighboring each other. In each of the window portions 29, one cam member 7 is swingably held, as described later.

Four cam member holding portions 23 having respectively such configurations as above described are arranged circumferentially equally spaced on the circumference of an imaginal circle centered on the center axis C, seen from the axial direction. Accordingly, the inner circumferential surface of each column member 25 and the inner circumferential surface of each flange portion 27 of the four holding portions 23 are arranged on one imaginary cylindrical surface centered on the center axis C.

The retainer 9 is further formed with a plurality of bearing portions 31 each being rectangular-column shaped and projected from the one axial side surface of the annular plate 21 in the one axial direction. The number of the bearing portions 31 is the same as the number of the cam member holding portions 23. Accordingly, in the present embodiment, there are four bearing portions 31. The bearing portions 31 and the cam member holding portions 23 are arranged alternately in the circumferential direction. Concretely, one bearing portion 31 is arranged between the circumferentially neighboring cam member holding portions 23. Accordingly, the plurality of the cam member holding portions 23 and the plurality of the bearing portions 31 are arranged alternately on the circumference of one imaginary circle centered on the center axis C, viewed from the axial direction. As configured above, the four bearing portions 31 are arranged on the diagonal positions of equal angles over the circumferential direction, in other words, 90 °distant angular positions over the circumferential direction with respect to the center axis C, seen from the axial direction.

The inner circumferential surface of the bearing portion 31 is arranged on an imaginary cylindrical surface that differs from the inner circumferential surface of the cam member holding portions 23, that is, the inner circumferential surfaces of the column portions 25 and the inner circumferential surface of the inner cylindrical surface of the flange portion 27. The plurality of the cam member holding portions 23 and the plurality of the bearing portions 31 are arranged between the outer peripheral surface 11 of the inner race 3 and the inner13 peripheral surface 11 of the outer race 5. The inner race 3 is arranged at the radially inner side of the bearing portions 31 and the cam member holding portions 23, as shown in Fig. 2.

The bearing portions 31 support, on the outer circumferential surfaces thereof, the outer race 5. The outer circumferential surface 33 of the bearing portion 31 may be a curved surface having a curvature radius differing from that of the inner peripheral surface 13 of the outer race 5. The one axial side end of the bearing portion 31 is formed with a flange portion 35 projected radially outwardly.

The annular plate 21 is formed with a flange portion 22 which is more radially outwardly extended than a portion of the annular plate 21 formed with the plurality of the cam member holding portions 23 and the plurality of the bearing portions 31.

The retainer 9 is arranged such that the flange portion 22 of the annular plate 21 is fitted in a circumferentially extended groove 37 formed on the inner peripheral surface 13 of the outer race 5, and the flange portion 35 of the bearing portion 31 is opposed in the axial direction to the one axial side end of the outer race 5. Thus, the retainer 9 is fixed to the outer race 5 to be impossible to move in the axial direction and impossible to rotate relatively in the circumferential direction.

The plurality of the cam members 7 are fitted in the window portions 29 of the retainer 9 respectively with one to one relationship from the radially outer side, with the axial direction of each cam member 7 being the same as the axial direction of the one-way clutch 1. Thus, the plurality of the cam members 7 are held circumferentially by the retainer 9. One cam member holding member 23 holds a plurality of the cam members 7 equiangularly in the circumferential direction. In the present embodiment, three cam members 7 are held in the one cam member holding portion 23. Surfaces of the opposite ends of each cam member 7 are located inside of a portion of the flange 27 and a portion of the annular plate 21 axially opposed to each other in the window portion 29 of the retainer 9. In other words, the axial size of the cam member 7 is smaller than the axial size of the window portion 9. As shown in Fig. 4A, in no torque loaded state, the semicircular portion 17 of the cam member 7 faces the inner race 3 and the bottom of the semicircular portion 17 is in contact with the outer peripheral surface 11 of the inner race 3, while the bulged portion 19 faces the outer race 5 and the top of the bulged portion 19 is in contact with the inner peripheral surface 13 of the outer race 5.

A circumference of the semicircular portion 17 of the cam member 7 is in contact with the pair of column portions 25 defining the window portion 29 of the retainer 9, and a part of the semicircular portion 17 passes through the window portion 29 of the retainer 9 and projects radially more inwardly than the pair of column portions 25. As described, by the pair of column portions 25 arranged in contact with the periphery of the cam member 7, the cam member 7 is held in the window portion 29 of the retainer 9 and in contact with the outer circumferential surface 11 of inner race 3 stably. With such a configuration, the cam member 7 may swing with in slide-contact with the pair of column portions 25 and the movement of the cam member 7 in the axial direction is restricted by the flange 27 and the annular plate 21.

As shown in Fig. 3, each cam member 7, at the radially outer portion thereof in the assembled state, is formed with a groove 39 extended in the circumferential direction of the inner race 3 or the outer race 5. The groove 39 is formed in the axially central portion of the radially outer peripheral portion of the cam member 7, and is formed circumferentially through the radially outer peripheral portion of the cam member 7. The groove 39 has a depth reaching the vicinity of the central portion of the cam member 7. Also, each bearing portion 31, at the radially outer portion thereof, is formed with a groove 41 extended in the circumferential direction.

The bearing portion 31 is formed, at the axially central portion of the radially outer circumferential portion thereof, with the groove 41. The groove 41 is formed circumferentially through the radially outer circumferential portion of the bearing portion 31 and has a depth reaching the vicinity of the central portion of the bearing portion 31.

One annular spring member 15 is provided through the grooves 39 of the respective cam members 7 and the grooves 41 of the respective bearing portions 31. The spring member 15 biases the respective cam members 7 radially inwardly. The bottom surface of the groove 39 of each cam member 7 is formed in a mountain shape having an angle such that the cam members 7, with biased radially inwardly by the spring member 15, swing in the direction in which the cam members 7 are in contact with the outer peripheral surface 11 of the inner race 3 and the inner circumferential surface 13 of the outer race 5. Accordingly, the respective cam members 7 are biased radially inwardly by the elastic force of the spring member 15 to be always in contact with the outer circumferential surface 11 of the inner race 3 and the inner peripheral surface 13 of the outer race 5. In this state of contact of each cam member 7 with the outer peripheral surface 11 of the inner race 3 and the inner peripheral surface 13 of the outer race 5, as shown in Fig. 4A, no torque is transmitted. As described, the spring member 15 biases the respective cam members 7 into no torque transmitting positions.

The retainer 9 is provided with a pair of radially extending cut-away portions 43 on the circumferential one side and circumferential other side of each bearing portion 31. Each of cut-away portions 43 is formed axially through the annular plate 21 and the flange portion 22 of the retainer 9 and forms a space having a predetermined width and extending radially. Each cut-away portions 43 open on the outer diameter side of the flange 22 of the annular plate 21 and extend to a radial position on the more inner diameter side than the cam member holding portion 23.

Thus, the retainer 9 has four pairs of the cut-away portions 43, in other words, is formed with eight cut-away portions 43. The paired cut-away portions 43 are parallel to each other.

Further, the annular plate 21 is formed with cut-away portions 45 each forming a space that opens on the radially inner side and extending substantially radially, with a predetermined width, to a position in the vicinity of the cam member holding portion 23. There are four such cut-away portions 45 with equal intervals in the circumferential direction. The number of the cut-away portions 45 is the same as the number of the bearing portions 31. The cut-away portions 45 and the bearing portions 31 are alternately arranged in the circumferential direction.

Thus, the cut-away portion 45 is located in the middle between the neighboring bearing portions 31, seen from the axial direction.

Since the retainer 9 has a structure made of a resin and is formed with the cut-away portions 43 and 45, the retainer 9 can deform elastically in the radial direction. Concretely, upon an external force being applied radially, the widths of the cut-away portions 43 and 45 change and elastic deformation of the retainer occurs. By such structure, improved assembling of the inner race 3 and the outer race 5 to the retainer 9 can be made without damaging the retainer 9.

Further, since the retainer 9 is able to deform elastically in the radial direction, the one-way clutch 1 according to the present embodiment may be assembled easily in automatic transmission or industrial machinery with no damage to the retainer 9.

Next, operation states of the one-way clutch 1 relating to the present embodiment having the above mentioned configuration will be described.

In no torque loaded state shown in Fig. 4A, the cam members 7 are in contact with the outer circumferential surface 11 of the inner race 3 and the inner circumferential surface 13 of the outer race 5 by the elastic force of the spring member 15, but no torque is transmitted in this state.

If a certain torque is loaded to the inner race 3 from this state, the respective cam members 7 swing to be brought into engagement with the inner race 3 and the outer race 5 so as to transmit torque. In other words, when the inner race 3 rotates clockwise as shown in Fig.4B along the outer circumferential surface 11 of the inner race 3, the cam members 7 rotate or swing counterclockwise by friction, and are brought into engagement with the outer circumferential surface 11 of the inner race 3 and the inner circumferential surface 13 of the outer race 5, by such engagement torque being transmitted from the inner race 3 to the outer race 5.

At this time, the inner peripheral surface 13 of the outer race 5 is supported by the four bearing portions 31 formed integrally with the retainer 9 and arranged at 90°angular positions along the circumferential direction with respect to the center axis C, so the retainer 9 and the outer race 5 rotate stably together with the inner race 3 in a body.

Further, since the plurality of the cam members 7 are held by four cam holding members 23 which are arranged at 90°angular positions along the circumferential direction with respect to the center axis C, and which respectively hold three cam members, thereby stable engagement between the inner race 3 and the outer race 5 is attained over the circumferential direction. As a result, the inner race 3 and the outer race 5 rotate stably.

On the other hand, when the inner race 3 rotates counterclockwise from no torque loaded state shown in Fig. 4A, the cam members 7 rotate freely with no engagement of the cam members 7 with the outer peripheral surface 11 of the inner race 3 and the inner peripheral surface 13 of the outer race 5. Accordingly, in this state, there is no torque transmission from the inner race 3 to the outer race 5.

As described above, in the one-way clutch 1 according to the present embodiment, the retainer 9 is composed of a resin, one-way clutch 1 and automatic transmission in which the one-way clutches are assembled can be reduced in weight. Further, the retainer 9 is integrally formed with the bearing portions 31 for supporting the inner peripheral surface 13 of the outer race 5, so no separate bearing is required to support the outer race 5. For this reason, increase in axial dimension of the one-way clutch 1 is prevented, and space for mounting the one-way clutch can be made small and the number of parts can be reduced. Thus, weight reduction of the one-way clutch can be realized.

Moreover, improved assembling the inner race 3 and the outer race 5 to the retainer 9, or improved assembling of the one-way clutch to the automatic transmission or any device of industrial machinery, can be made, with no damage of the retainer 9.

Incidentally, the one-way clutch 1 according to the present invention is not limited to the above embodiment but may be modified properly. With respect to the above embodiment, an example of the one-way clutch that transmits torque from the inner race 3 to the outer race 5 has been illustrated, but the present invention may be applied to a one-way clutch which transmits torque from the outer race 5 to the inner race 3. Further, the number of the bearing portions 31 and the number of the cam member holding portions 23 also can be changed properly, depending on the size of the one-way clutch, torque capacity or the like. The number of the cam members 7 held by one cam member holding portion 23 may be changed properly also. Further, the number of the cut-away portions 43 and 45 may be changed properly.

### REFERENCE SIGNS LIST

1: one-way clutch
3: inner race
5: outer race
7: cam member
9: retainer
11: outer circumferential surface of inner race
13: inner circumferential surface of outer race
15: spring member
21; annular plate
23: cam member holding portion
29: window portion
31: bearing portion
43, 45: cut-away portion

## Claims

1. A one-way clutch having:
an inner race (3);
an outer race (5) arranged on a center axis of said inner race coaxially therewith,
a plurality of cam members (7) interposed between said inner race and said outer race to serve torque transmission between said inner race and said outer race;
a retainer member (9) for holding the plurality of said cam members; and
a spring member (15) biassing the plurality of said cam members to no torque transmitting positions, being **characterized in that**:
the retainer member (9) is provided with an annular plate (21) arranged on said center axis, said plate member (21) being provided on one axial side surface thereof with a plurality of bearing portions (31) supporting the inner circumferential surface of said outer race (5), and the same number of holding portions (23) as the number of said bearing portions, the holding portions each holding two or more predetermined number of said cam members with predetermined intervals along the circumferential direction;
the plurality of said bearing portions (31) is respectively arranged, with respect to said center axis, at diagonal positions along the circumferential direction equiangularly, the plurality of said holding portions (23) is respectively arranged, with respect to said center axis, at diagonal positions along the circumferential direction equiangularly;
the plurality of said bearing portions (31) and the plurality of said holding portions (23) are arranged alternately along the circumferential direction; and
the annular plate (21) is formed with a plurality of cut-away portions (43, 45) extended radially.

2. A one-way clutch according to claim 1, wherein said retainer is formed of a resin.

3. A one-way clutch according to claim 1 or claim 2,
wherein the plurality of said cut-away portions (43, 45) include a plurality of first cut-away portions (43) which open radially toward outside of said annular plate and a plurality of second cut-away portions (45) which open radially toward inside of said annular plate.

4. A one-way clutch according to claim 3, wherein said first cut-away portions (43) are formed adjacent to said bearing members (31).

5. A one-way clutch according to claim 3, wherein said second cut-away portions (45) and the plurality of said bearing portions (31) are arranged alternately in the circumferential direction.

## Patentansprüche

1. Einwegkupplung, die Folgendes aufweist:
einen inneren Laufring (3);
einen äußeren Laufring (5), der auf einer Mittelachse des inneren Laufrings koaxial damit angeordnet ist,
eine Vielzahl von Nockenelementen (7), die zwischen dem inneren Laufring und dem äußeren Laufring angeordnet sind, um der Drehmomentübertragung zwischen dem inneren Laufring und dem äußeren Laufring zu dienen;
ein Halteelement (9) zum Halten der Vielzahl von Nockenelementen; und
ein Federelement (15), das die Vielzahl von Nockenelementen in nicht drehmomentübertragende Stellungen spannt, **dadurch gekennzeichnet, dass**:
das Halteelement (9) mit einer auf der Mittelachse angeordneten ringförmigen Platte (21) versehen ist, wobei das Plattenelement (21) auf einer axialen Seitenoberfläche davon mit einer Vielzahl von Lagerabschnitten (31), die die Innenumfangsoberfläche des äußeren Laufrings (5) stützen, und der gleichen Anzahl von Halteabschnitten (23) wie die Anzahl der Lagerabschnitte versehen ist, wobei die Halteabschnitte jeweils eine vorgegebene Anzahl von zweien oder mehr der Nockenelemente mit vorgegebenen Abständen entlang der Umfangsrichtung halten,
die Vielzahl der Lagerabschnitte (31) jeweils in Bezug auf die Mittelachse an diagonalen Positionen entlang der Umfangsrichtung gleichwinklig angeordnet sind, wobei die Vielzahl von Halteabschnitten (23) jeweils in Bezug auf die Mittelachse an diagonalen Positionen entlang der Umfangsrichtung gleichwinklig angeordnet sind;
die Vielzahl der Lagerabschnitte (31) und die Vielzahl der Halteabschnitte (23) abwechselnd entlang der Umfangsrichtung angeordnet sind; und
die ringförmige Platte (21) mit einer Vielzahl von sich radial erstreckenden ausgeschnittenen Abschnitten (43, 45) gebildet ist.

2. Einwegkupplung nach Anspruch 1, wobei der Halter aus einem Harz gebildet ist.

3. Einwegkupplung nach Anspruch 1 oder Anspruch 2,
wobei die Vielzahl der ausgeschnittenen Abschnitte (43, 45) eine Vielzahl von ersten ausgeschnittenen Abschnitten (43), die radial in Richtung auf außerhalb der ringförmigen Platte offen sind, und eine Vielzahl von zweiten ausgeschnittenen Abschnitten (45), die radial in Richtung auf innerhalb der ringförmigen Platte offen sind, umfasst.

4. Einwegkupplung nach Anspruch 3, wobei die ersten ausgeschnittenen Abschnitte (43) den Lagerelementen (31) benachbart gebildet sind.

5. Einwegkupplung nach Anspruch 3, wobei die zweiten ausgeschnittenen Abschnitte (45) und die Vielzahl der Lagerabschnitte (31) in der Umfangsrichtung abwechselnd angeordnet sind.

## Revendications

1. Embrayage à roue libre ayant :
une cage intérieure (3) ;
une cage extérieure (5) agencée sur un axe central de ladite cage intérieure de manière coaxiale par rapport à celle-ci,
une pluralité d'éléments de came (7) intercalés entre ladite cage intérieure et ladite cage extérieure pour assurer la transmission de couple entre ladite cage intérieure et ladite cage extérieure ;
un élément de retenue (9) servant à supporter la pluralité desdits éléments de came ; et
un élément de ressort (15) sollicitant la pluralité desdits éléments de came vers des positions ne transmettant aucun couple, étant **caractérisé en ce que** :
ledit élément de retenue (9) est doté d'une plaque annulaire (21) agencée sur ledit axe central, ledit élément formant plaque (21) étant doté, sur une surface latérale axiale de celui-ci, d'une pluralité de parties de butée (31) supportant la surface circonférentielle intérieure de ladite cage extérieure (5), et du même nombre de parties de support (23) que le nombre desdites parties de butée, les parties de support supportant chacune un nombre prédéterminé de deux ou plus parmi lesdits éléments de came avec des intervalles prédéterminés le long de la direction circonférentielle ;
la pluralité desdites parties de butée (31) est agencée respectivement, par rapport audit axe central, au niveau de positions diagonales le long de la direction circonférentielle de manière équiangulaire, la pluralité desdites parties de support (23) est agencée respectivement, par rapport audit axe central, au niveau de positions diagonales le long de la direction circonférentielle de manière équiangulaire ;
la pluralité desdites parties de butée (31) et la pluralité desdites parties de support (23) sont agencées de manière alternée le long de la direction circonférentielle ; et
la plaque annulaire (21) est formée à partir d'une pluralité de parties découpées (43, 45) étendues radialement.

2. Embrayage à roue libre selon la revendication 1, dans lequel ledit élément de retenue est formé à partir d'une résine.

3. Embrayage à roue libre selon la revendication 1 ou la revendication 2,
dans lequel la pluralité desdites parties découpées (43, 45) comprend une pluralité de premières parties découpées (43) qui s'ouvrent radialement vers l'extérieur de ladite plaque annulaire et une pluralité de deuxièmes parties découpées (45) qui s'ouvrent radialement vers l'intérieur de ladite plaque annulaire.

4. Embrayage à roue libre selon la revendication 3, dans lequel lesdites premières parties découpées (43) sont formées de manière adjacente par rapport auxdits éléments de butée (31).

5. Embrayage à roue libre selon la revendication 3, dans lequel lesdites deuxièmes parties découpées (45) et la pluralité desdites parties de butée (31) sont agencées de manière alternée dans la direction circonférentielle.
